# EUROPÄISCHE PATENTSCHRIFT

(11) **EP 0 924 781 B1**
(45) Veröffentlichungstag und Bekanntmachung des Hinweises auf die Patenterteilung: **07.03.2001**
(21) Anmeldenummer: 98123467.7
(22) Anmeldetag: 11.12.1998
(51) Int. Cl.: H01M 2/20, H01M 2/38, H01M 10/42, H01R 13/00

(54) **Ladesteckvorrichtung**
Charging plug/socket device
Dispositif de fiche/prise de courant pour recharge

(30) Priorität: 18.12.1997 DE 29722423 U
(43) Veröffentlichungstag der Anmeldung: 23.06.1999
(73) Patentinhaber: Schaltbau Aktiengesellschaft, D-81677 München (DE)
(72) Erfinder: Keller, Gerhard, 85591 Vaterstetten (DE)
(74) Vertreter: Grünecker, Kinkeldey, Stockmair & Schwanhäusser Anwaltssozietät

(56) Entgegenhaltungen:
- EP-A- 0 622 859
- DE-U- 9 114 909
- DE-U- 9 204 385
- DE-U- 29 612 378
- US-A- 3 777 298
- US-A- 5 658 159

## Beschreibung

Die vorliegende Erfindung bezieht sich auf eine Ladesteckvorrichtung zum Anschließen eines Akkumulators, mit einem Stecker und einer Dose, die entsprechend ein Steckergehäuse und ein Dosengehäuse aufweisen und die jeweils in dem entsprechenden Gehäuse angeordnete Hauptkontakte und/oder Pilotkontakte aufweisen, wobei die Gehäuse einen mit dem jeweils anderen Gehäuse steckbaren Kontaktbereich und einen Anschlußbereich aufweisen und die Hauptkontakte und/oder Pilotkontakte ebenfalls einen mit dem jeweils anderen Hauptkontakt und/oder Pilotkontakt koppelbaren Kontaktbereich und einen Anschlußbereich aufweisen und wobei die Kontaktbereiche der Hauptkontakte und/oder Pilotkontakte in dem Kontaktbereich von Stecker oder Dose und die Anschlußbereiche der Hauptkontakte und/oder Pilotkontakte in dem Anschlußbereich von Stecker oder Dose angeordnet sind.

Eine solche Ladesteckvorrichtung ist z.B. aus der EP 0 622 859 A1 bekannt. Die Dose umfaßt einen Steckkragen, in den die Anschlußbereiche der Stiftkontakte hineinragen. Die Stiftkontakte sind an einem Wandabschnitt der Dose gehalten und deren Anschlußbereiche erstrecken sich in eine an den umlaufenden Kragen anschließenden Anschlußschürze. Diese Anschlußschürze ist nach hinten zum Durchführen der Kabel offen. Der Stecker weist einen in den Steckkragen der Dose einsteckbaren Steckansatz auf, in dem Buchsenkontakte angeordnet sind. Auch der Stecker umfaßt eine sich an den Steckansatz anschließende Anschlußschürze, in die sich die Anschlußbereiche der Buchsenkontakte erstrecken. Die Arretierung der Stiftkontakte in der Dose und der Buchsenkontakte im Stecker erfolgt über eine seitlich in einen Schlitz des Gehäuses eingeschobene Arretierplatte, die Bereiche der Kontakte formschlüssig umgibt und diese in dem jeweiligen Gehäuse arretiert.

Ein Problem bei dieser Ausführungsform besteht darin, daß bestimmte Reparaturarbeiten, bei denen ein Umrüsten am Gehäuse oder ein Austauschen von Gehäusen bzw. Kontakten vorgenommen werden muß, zu unerwarteten Störungen führen kann. Eine solche Störung entsteht z.B., wenn Reparatur- oder sonstige Arbeiten in relativ kurzer Zeit durchgeführt werden müssen. Unter diesen Umständen wird des öfteren vergessen. die Kontakte stromlos zu schalten. Wird nun beim Ausbau der Kontakte nicht mit außerster Vorsicht gearbeitet, kann es zum Berühren der einzelnen Kontakte und zu einem Kurzschluß kommen. Ein solcher Umstand ist aus Arbeitssicherheitsgründen nicht tragbar, insbesondere, weil durch immer leistungsstärkere Akkumulatoren höhere Stromstärken und höhere Spannungen an den Steckvorrichtungen anliegen.

Es ist daher die Aufgabe der vorliegenden Erfindung, eine gattungsgemäße Ladesteckvorrichtung montagefreundlicher und sicherer auszugestalten.

Diese Aufgabe wird erfindungsgemäß dadurch gelöst, daß der Anschlußbereich des Steckers oder der Dose als Steckaufnahme ausgebildet ist, daß eine Einschubkassette mit Halte- und Positioniereinrichtungen vorgesehen ist, daß die Haupt- und/oder Pilotkontakte in den Halte- und Positioniereinrichtungen der Einschubkassette vorpositioniert sind und daß die Einschubkassette zusammen mit den vorpositionierten Hauptund/oder Pilotkontakten lösbar in die Steckaufnahme am Stecker der Dose einsteckbar ist. Unter dem Begriff "vorpositioniert" ist insbesondere zu verstehen, daß die bereits an die Leitungen angeschlossenen und zugentlasteten Haupt- und/oder Pilotkontakte durch die Halte- und Positioniereinrichtungen an der Einschubkassette angeordnet sind. Des weiteren können die Kontakte und die Leitungsanschlüsse elektrisch vorgetestet sein.

Auf einfache Weise ist es nunmehr möglich, daß die Einschubkassette aus dem Gehäuse entnommen wird, ohne daß es zu einer Berührung der Kontakte kommen kann. Darüber hinaus können nun in einfacher Weise Montage-, Nachrüst- und Reparaturarbeiten an dem jeweiligen Gehäuse vorgenommen werden, ohne daß die Kontakte strom- bzw. spannungsfrei sein müssen. Dies ist insbesondere dann wichtig, wenn es sich um eine Ladesteckvorrichtung mit Fluidanschluß handelt, da Reparaturarbeiten am Wasserleitungssystem der Steckvorrichtung ebenfalls eine gewisse Gefahr darstellen, wenn die Kontakte noch unter Strom bzw. Spannung gehalten sind. Zusätzlich wird die Montage der Kontakte am Gehäuse maßgeblich vereinfacht, da diese nicht mehr unter beengten Verhältnissen eingefädelt werden müssen, sondern als Block in Form der Einschubkassette auf einmal einsteckbar sind. Die Einschubkassette ist dann im Anschlußbereich des Gehäuses lösbar arretiert.

Bevorzugt können in der Steckaufnahme von Stecker oder Dose und an der Einschubkassette Rasteinrichtungen vorgesehen sein, die im montierten Zustand von Stecker oder Dose mit der zugehörigen Einschubkassette miteinander verrastet sind. Derartige Rasteinrichtungen lassen sich relativ stabil und dennoch leicht lösbar ausführen, so daß eine beträchtliche Anzahl von Steckvorgängen ausgeführt werden können. ohne daß mit einem Versagen zu rechnen ist. Darüber hinaus sind keine zusätzlichen Arretier- bzw Halteelemente erforderlich. Durch einfaches Einschieben der Einschubkassette erfolgt durch diese Bewegung auch automatisch die Verrastung, sobald die Gebrauchsstellung erreicht ist.

Eine ausreichende Trennung und somit gute Abgrenzung zwischen Anschlußbereich und Kontaktbereich wird dadurch erreicht, daß zwischen dem Anschlußbereich und dem Kontaktbereich von Stecker oder Dose eine Trennwand nach Art einer Lochmaske angeordnet ist, wobei sich die Haupt- und/oder Pilotkontakte durch entsprechende Öffnungen in der Trennwana von dem Anschlußbereich in den Kontaktbereich erstrecken, so daß die Kontaktbereiche der Haupt- und/oder Pilotkontakte im Kontaktbereich des Stekkers oder der Dose angeordnet sind. Die vorpositionierten Haupt- und/oder Pilotkontakte erfahren hierdurch eine zusätzliche Abstützung. Durch das Hindurchführen der Anschlußbereiche der Kontakte durch die Öffnungen ist auch gleichzeitig eine Trennung zwischen Anschlußbereich und Kontaktbereiche erreicht, da die Kontakte die Offnungen verschließen. Diese Lochmaske kann auch als Codiermöglichkeit herangezogen werden, falls zwar eine gleich große Einschubkassette, jedoch mit anderer Anordnung der Kontakte fälschlicherweise eingeschoben werden soll.

Eine weitere Codierung bzw. eine bessere Möglichkeit zur Verankerung der Einschubkassette ist bei einer weiteren Ausführungsform dadurch gegeben, daß die dem Aufnahmebereich zugewandte Seite der Trennwand zumindest abschnittsweise eine Profilierung aufweist, die mit einer an der zugeordneten Stirnseite der Einschubkassette zumindest abschnittsweise angeordneten Gegenprofilierung ineinandergreift. Eine solche Profilierung hat auch zusätzlich den Vorteil, daß sich die Kriechstrecken an der Oberflache der Stirnseite erhöhen und die Kontakte enger aneinander angeordnet werden konnen. Hierdurch wird selbst bei Ausführungsformen mit relativ hohen Spannungen und Strömen eine sehr kompakte Ausführung erzielt.

Gemäß einer weiteren Ausführungsform wird die Profilierung und Gegenprofilierung dadurch erreicht, daß diese als entsprechend ineinandergreifbare, konzentrisch zu den Öffnungen in der Trennwand angeordnete Ringvorsprünge und/oder Ringvertiefungen ausgebildet sind. Es handelt sich hierbei um geometrisch einfache Gebilde, die einfach ineinandersteckbar sind und dennoch die gewünschten Vorteile aufweisen.

Eine gewisse Zentrierung und Einführhilfe kann weiter dadurch geschaffen werden, daß die Ringvorsprünge und/oder Ringvertiefungen eine kegelstumpfförmige Mantelfläche bzw. Innenfläche aufweisen. Der Kegelwinkel ist dabei so gewählt, daß es nicht zu einem selbständigen Verkeilen kommt, sondern lediglich eine Zentrierwirkung erzielt ist. Ein Kegelwinkel von ca. 2° wird bevorzugt.

Um die Trennwand stabiler auszuführen und eine großflächige Führung der Kontakte zu erlangen, können die Ringvorsprünge an der Trennwand des Steckers oder der Dose und die Ringvertiefung in der Stirnseite der Einschubkassette angeordnet sein.

Dabei können eine Höhe bzw. Tiefe sowie eine Breite der Ringvorsprünge und/oder Ringvertiefungen derart gewählt sein, daß die elektrischen Kriechstrecken von einem Kontakt zum nächstliegenden Kontakt oberhalb eines für entsprechende Spannungen bzw. Stromstärken genormten Wertes, bevorzugt 6 mm, liegen. Um die Kontakte möglichst kompakt bzw. nah aneinander, zu positionieren, eignet sich insbesondere die Ausgestaltung einer entsprechenden Höhe bzw. Tiefe zur Verlängerung der elektrischen Kriechstrecken.

Bevorzugt können die Halte- und Positioniereinrichtungen Rasteinrichtungen aufweisen, die mit entsprechenden Rasthinterschneidungen an den Haupt- und/oder Pilotkontakten verrastbar sind. Hierdurch sind auch die Haupt- und/oder Pilotkontakte sehr einfach an der Einschubkassette zu befestigen und gegebenenfalls auch wieder zu lösen. Dadurch, daß die Einschubkassette nach außen nicht geschlossen sein muß, läßt sich auch das Anbringen der Kontakte durch entsprechende Sichtkontrolle sehr einfach durchführen. Da bereits im Stand der Technik vorhandene Haupt- und/oder Pilotkontakte geeignete Rasthinterschneidungen aufweisen, müssen diese nicht neu konstruiert werden.

Insbesondere eignet sich hierfür gemäß einer Ausführungsform, daß zwischen dem Kontaktbereich und dem Anschlußbereich der Haupt- und/oder Pilotkontakt ein radial vorstehender, ringscheibenförmiger Abschnitt derart vorgesehen und ausgebildet ist, daß die Rasteinrichtungen der Halte- und Positioniereinrichtungen an diesem verrastbar sind.

Ein solcher ringscheibenförmiger Abschnitt kann auf einfache Weise dadurch sicher in der Einschubkassette gehalten werden, das im Bereich der Ringvertiefungen radial nach innen vorstehende Vorsprünge angeordnet sind und daß der ringscheibenförmige Abschnitt im vorpositionierten Zustand der Haupt- und/oder Pilotkontakte zwischen den Vorsprüngen und der zugehörigen Rasteinrichtung der Halte- und Positioniereinrichtung angeordnet ist. Die Vorsprünge dienen somit als Anschlag für das Einschieben der Kontakte, bis die Rasteinrichtungen an der Hinterschneidung einschnappen.

In den Ringvorsprüngen können entsprechende Aussparungen angeordnet sein, in die die Vorsprünge an den Vertiefungen eingreifen. Hierdurch ist eine weitere Codiermoglichkeit und ziemlich exakte Positioniermöglichkeit gegeben. Bei paßgenauer Ausführung der Aussparungen und Vorsprünge kann eine hohe Montagegenauigkeit verwirklicht werden.

Damit auch die elektrischen Kriechstrecken auf der dem Kontaktbereich zugewandten Seite der Trennwand vergrößert werden (insbesondere bei der Dose), ist eine um die Öffnungen angeordnete Profilierung derart angeordnet, daß die elektrischen Knechstrecken von einem Kontakt zum nächstliegenden Kontakt oberhalb eines für entsprechende Spannungen bzw. Stromstärken genormten Wertes, bevorzugt 6 mm, liegen.

Eine günstige Ausgestaltung wird gemäß einer Ausführungsform dadurch erreicht. daß die Profilierung auf der dem Kontaktbereich zugewandten Seite der Trennwand als konzentrisch um die Öffnungen angeordnete Ringstege ausgebildet ist. Die Stirnflächen cer Ringstege können auch gleichzeitig bei der Dose den Anschlag für den Kontaktbereich des Steckers bilden. Die Ringstege vergrößern nochmals den Anlagebereich der Kontakte in der Trennwand, wodurch eine sehr gute Führung der Kontakte gegeben ist.

Vorteilhafterweise kann die Einschubkassette als parallele Führungsschienen ausgebildete Seitenwände aufweisen, die einen äußeren Abstand voneinander und eine Höhe derart aufweisen, daß die Einschubkassette im wesentlichen paßgenau in die Steckaufnahme an dem Stecker oder der Dose einsteckbar ist. Es reicht vollkommen aus, wenn diese Bedingung die Seitenwände erfüllen, ansonsten ist die Ausgestaltung zwischen diesen Seitenwänden beliebig durchführbar, solange die Seitenwände die Höchstmaße vorgeben und keine Bauelemente über die Höhe oder seitlich über die Seitenwände überstehen. Durch die so gebildeten parallelen Führungsschienen ist eine paßgenaue Aufnahme der Einschubkassette im Gehäuse mit minimalstem Aufwand gegeben.

Günstigerweise kann an dem Stecker und dem Dosengehäuse eine außerhalb des von dem Gehäuse umgrenzten Kontakt- und Anschlußbereiches angeordnete Fluidkupplungseinheit angeordnet sein. In der letzten Zeit werden immer mehr Ladesteckvorrichtungen verlangt, die gleichzeitig beim Steckvorgang auch eine Fluidverbindung herstellen, damit eine Naßbatterie sowohl mit Flüssigkeit versorgt als auch Luft zur Verwirbelung beim Ladevorgang eingeblasen werden kann. Durch die außerhalb des Kontaktund Anschlußbereiches angeordnete Fluidkupplungseinheit erfolgt eine sichere Trennung von fluidführenden Teilen und stromführenden Bereichen.

Eine sehr einfache, jedoch effektive Ausgestaltungsmöglichkeit, besteht darin, daß das Gehäuse eine Oberseite und eine Unterseite aufweist und die Fluidkupplungseinheit an der Unterseite angeordnet ist. Bislang wurden Fluidkupplungseinheiten immer auf der Oberseite oder im Steckbereich angeordnet. Diese Ausgestaltung macht sich einfacher physikalischer Gegebenheit zunutze, da bei einer an der Unterseite angeordnete Fluidkupplungseinheit, z.B. Wasser im Leckagefall nach unten wegtropft, ohne in den elektrischen Steckbereich hineinzufließen.

Insbesondere kann die Fluidkupplungseinheit derart in einer Einbuchtung am Gehäuse angeordnet sein, daß die äußere Kontur der Fluidkupplungseinheit nicht über einen von der maximalen Höhe, Breite und Länge des Gehäuses definierten Quader übersteht. Dies ist insbesondere dann sinnvoll, wenn an dem Gehäuse Anbringungsmöglichkeiten zum z.B. Anschrauben des Gehäuses an eine entsprechende Einrichtung vorgesehen sind. Die Fluidkupplungseinheit wirkt sich daher nicht störend aus.

Von Vorteil ist es insbesondere, wenn die Fluidkupplungseinheit eine parallel zu den Kontakten angeordnete Luftleitung und eine parallel zu den Kontakten angeordnete Wasserleitung aufweist, wodurch entsprechende Möglichkeiten zur Batteneversorgung gegeben sind.

Im folgenden wird ein Ausführungsbeispiel der vorliegenden Erfindung anhand einer Zeichnung näher erläutert. Es zeigen:
- Fig. 1: eine Dose einer Ladesteckvornchtung mit Stiftkontakten in einer perspektivischen Vorderansicht.
- Fig. 2: das Dosengehäuse aus Figur 1 und die montierte Einschubkassette mit Stiftkontakten in einer perspektivischen Darstellung,
- Fig. 3: eine perspektivische Explosionsdarstellung der Dose aus Figur 1,
- Fig. 4: eine Vorderansicht des Dosengehäuses in einer perspektivischen Darstellung,
- Fig. 5: eine Rückansicht des Dosengehäuses aus Figur 4 in einer perspektivischen Darstellung,
- Fig. 6: die Einschubkassette aus Figur 2 in einer perspektivischen, teilweise explodierten Seitenansicht,
- Fig. 7: ein Stecker der erfindungsgemäßen Ladesteckvorrichtung in einer perspektivischen Vorderansicht und
- Fig. 8: das Steckergehäuse aus Figur 7 und daneben angeordnete Einschubkassette mit Buchsenkontakten in einer perspektivischen Draufsicht.

Die Ladesteckvorrichtung dient insbesondere zum Anschließen eines Akkumulators an eine Ladestation, aber auch als trennbare elektrische Verbindung zwischen Akkumulator und elektrisch betriebenem Flurförderfahrzeug.

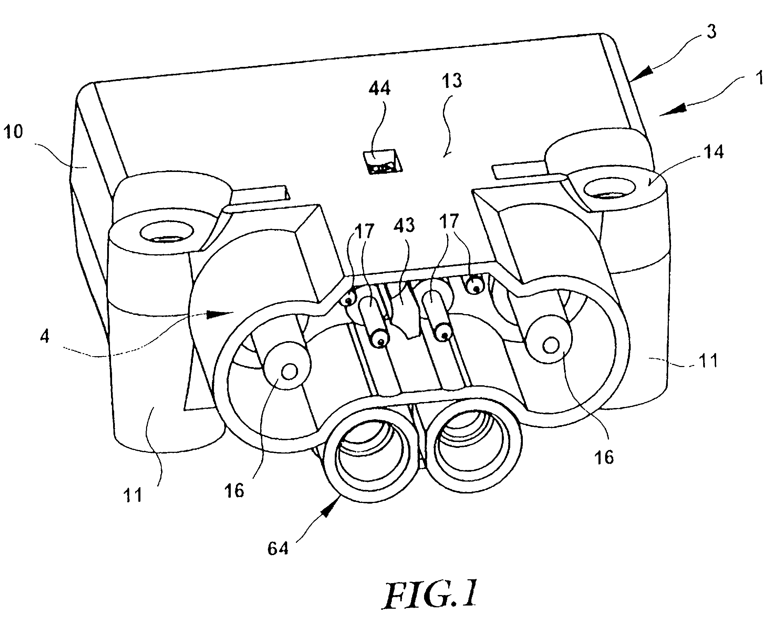

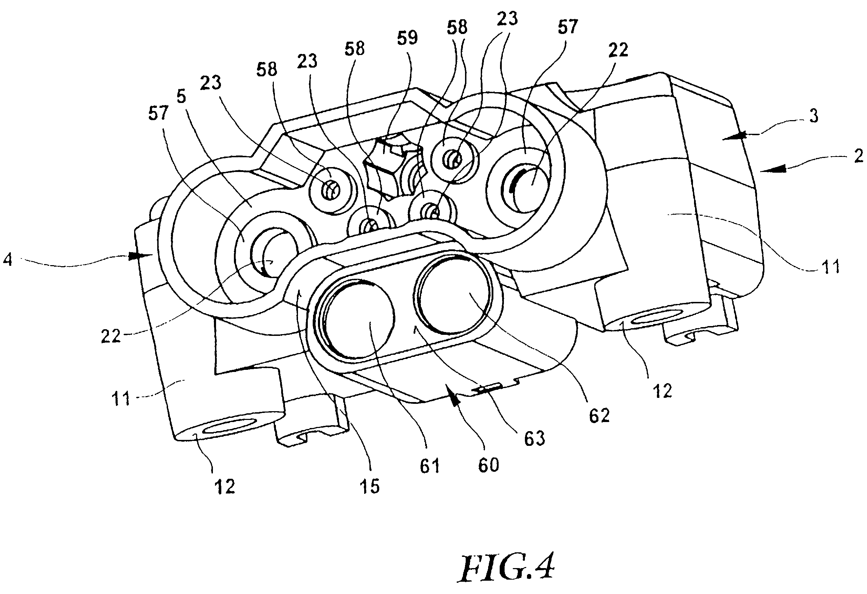

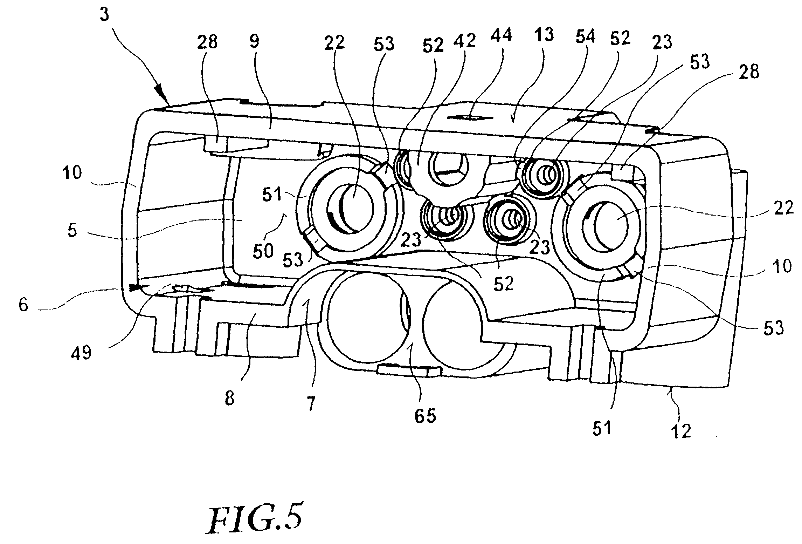

Die in den Figuren 1 bis 3 dargestellte Dose 1 der Ladesteckvorrichtung umfaßt das in den Figuren 4 und 5 dargestellte Dosengehäuse 2, das einen umlaufenden, nach hinten offenen Anschlußtopf bzw. -bereich 3 und eine axial daran anschließende, entgegengesetzt offene Kontaktschürze 4, die den Kontaktbereich definiert aufweist. Zwischen dem Anschlußtopf 3 und der Kontaktschürze 4 befindet sich im Innern des Dosengehäuses 2 eine senkrecht zur Längserstreckung der Dose 1 verlaufende und diese voneinander trennende Trennwand 5, die in Form einer Lochmaske ausgebildet ist, wie im folgenden noch näher beschrieben werden wird.

Der Anschlußtopf 3 definiert weiter eine zur Rückseite des Dosengehäuses 2 hin offene Steckaufnahme 6. Die Steckaufnahme 6 ist in ihrem Mittenbereich im Querschnitt durch eine Einbuchtung 7 der unteren Anschlußtopfwand 8 verkleinert. Die obere Wand 9 verläuft geradlinig. Die Seitenwände 10 des Anschlußtopfes 3 bestehen aus zwei Abschnitten, die in leichtem Winkel zueinander verlaufen, so daß die breiteste Stelle des Anschlußtopfes 3 in der Mitte der Seitenwände 10 am Stoßpunkt der Wandabschnitte liegt.

Im Übergangsbereich von dem Anschlußtopf 3 zur Kontaktschürze 4 befinden sich links und rechts am Dosengehäuse 2 Befestigungshülsen 11 (können wahlweise auch mehr sein) deren Unterseite 12 die untere Aufstandfläche der Dose 1 definiert. Zur Oberseite 13 des Dosengehäuses 2 weisen die Oberseiten 14 der Befestigungshülsen 11 einen Versatz nach unten auf, so daß z.B. Schraubenköpfe in diesem Versatz Platz haben, ohne über die Oberseite 13 der Dose 1 überzustehen.

Die Kontaktschürze 4 wird durch einen umlaufenden Steg definiert und weist an ihrer Unterseite ebenfalls eine Einbuchtung 15 auf, die in Verlängerung der Einbuchtung 7 ausgebildet ist und gleichen Querschnitt aufweist. Die Seiten der Kontaktschürze 4 werden durch Kreisbogenabschnitte definiert und an der Oberseite geht die Kontaktschürze 4 in ihrem mittleren Bereich aufgrund eines weiteren Absatzes eben in die Oberseite 13 des Dosengehäuses 2 über.

In dem gezeigten Ausführungsbeispiel sind in der Dose 1 zwei parallel zueinander angeordnete Hauptstiftkontakte 16 und vier zwischen den beiden Hauptstiftkontakten 16 angeordnete, parallel zueinander ausgerichtete Pilotkontaktstifte 17 vorgesehen. Die Kontakte 16 und 17 weisen jeweils einen zylindrischen Kontaktbereich 18 und 19 auf, der sich in die Kontaktschürze 4 hinein erstreckt, und einen hülsenförmigen Anschlußbereich 20 bzw. 21 auf, der im betriebsbereiten Einbauzustand im Anschlußtopf 3 angeordnet ist und mit entsprechenden Leitungen (nicht dargestellt) verbunden ist. Die Kontakte 16 und 17 erstrecken sich demnach durch die Trennwand 5, die entsprechende zylindnsche Öffnungen 22 für die Hauptstiftkontakte 16 und zylindrische Öffnungen 23 für die Pilotkontaktstifte 17 aufweist.

Des weiteren ist eine Einschubkassette 24 vorgesehen, die seitlich von zwei schienenformigen Seitenwänden 25 und an ihrer Vorderseite durch eine Stirnwand 26 begrenzt ist. Die Seitenwände 25 weisen eine Höhe und einen äußeren Abstand derart zueinander auf, daß sie im wesentlichen paßgenau in die Steckaufnahme 6 des Anschlußtopfes 3 einführbar sind. An ihrem vorderen Bereich weisen die Seitenwände 25 eine Aussparung 27 auf, in die die Stegabschnitte 28 entlang der Steckaufnahme 6 eingeschoben werden und unter die abgesetzte Anschraubfläche 14 passen. Die Stirnwand 26 weist zwei parallele Befestigungsöffnungen 29 für die Hauptstiftkontakte 16 und vier zwischen diesen angeordnete Befestigungsöffnungen 30 für die Pilotkontaktstifte 17 auf.

Den Befestigungsöffnungen 29 und 30 ist jeweils eine Halte- und Positioniereinrichtung zugeordnet. Bei den Befestigungsöffnungen 29 handelt es sich bei dieser Einrichtung um ein konzetrisch zur Befestigungsöffnung 29 angeordnetes Ringelement 31, das an der Einschubkassette 24 verankert ist oder einstückig mit dieser ausgebildet ist und das teilweise sich in den Querschnitt der Öffnung hinein erstreckende Rastlappen 32 umfaßt, die eine Art spreizbaren Kegel bilden. In die Befestigungsöffnungen 30 können entsprechende Ringrastelemente (nicht dargestellt) eingepreßt werden, die die Halterung der Pilotkontaktstifte 17 übemehmen.

Die Hauptstiftkontakte 16 weisen zwischen ihrem hülsenförmigen Anschlußbereich 20 und ihrem zylindrischen Kontaktbereich 18 einen ringscheibenförmigen Abschnitt 33 auf, dessen Außendurchmesser und Breite so bemessen ist, daß er im wesentlichen paßgenau in die Befestigungsöffnungen 29 einsetzbar ist und für die Rastlappen 32 eine Hinterschneidung bildet.

In die Befestigungsöffnungen 29 und 30 sind ausgehend von der Stirnwand 26 Absätze in Form von Ringvertiefungen 34 und 35 eingearbeitet. Diese weisen einen Durchmesser auf, der größer ist, als der Durchmesser der jeweils zugehörigen restlichen Befestigungsöffnungen 29 oder 30. Die Innenfläche der Ringvertiefung 34 und 35 ist wie die zur Befestigungsöffnung 29 und 30 im wesentlichen zylindermantelförmig. In den Ringvertiefungen 34 sind quaderförmige Vorsprünge 36 angeordnet. Die Hauptfunktion dieser quaderförmigen Vorsprünge 36 besteht darin, daß sie als Anschlag für den ringscheibenförmigen Abschnitt 33 dienen, so daß der Abschnitt 33 zwischen den zwei diametral gegenüberliegenden Vorsprüngen 36 und den Rastlappen 32 angeordnet ist. Die Hauptstiftkontakte 16 sind hierdurch sicher in der Einschubkassette 24 gehalten. Die Einschubkassette 24 umfaßt auch ein Kabelklemmelement 37, das mit Schrauben 38 an der Bodenplatte 39 der Einschubkassette 24 anschraubbar ist. Durch dieses werden die Kabel für die Hauptstiftkontakte 16 und Pilotkontaktstifte 17 sicher gehalten und mit einer Zugentlastung versehen. Die Einschubkassette weist an ihrer Bodenplatte 39 eine Einbuchtung 40 auf, die entsprechend an die Einbuchtung 7 im Anschlußtopf 3 angepaßt ist. Die Befestigungsöffnungen 30 sind so in der Einschubkassette 24 integriert, daß zwischen ihnen eine Rinne 41 verläuft. Diese Rinne 41 dient zur Aufnahme einer an der Trennwand 5 angeordneten Steckbefestigung 42 zum Anordnen und Befestigen eines Codierstifts 43, der sich dann in bekannter Weise mit seinem Codierbereich in die Kontaktschürze 4 erstreckt und dort zwischen den Kontaktbereichen 19 der Pilotkontaktstifte 17 angeordnet ist (siehe Figur 1). In der Oberseite 13 des Gehäuses 2 ist ein Sichtfenster 44 eingearbeitet, durch das die auf dem Codierstift 43 aufgedruckte oder angeformte Beschriftung zur Erkennung der entsprechenden Codierstellung zu sehen ist. Der hier verwendete Codierstift 43 weist acht verschiedene Codierstellungen auf.

Im Bereich der Stirnwand 26 umfaßt die Einschubkassette 24 durchgehende Öffnungen 45, die mit den Öffnungen in den Befestigungshülsen 11 fluchten, so daß die Befestigungselemente auch durch diese hindurchsteckbar sind. Die Seitenwände 25 der Einschubkassette 24 weisen an ihrem unteren Randbereich einen Rasthaken 46 auf, der durch einen Schlitzbereich 47 elastisch einfedem kann. Der Schlitzbereich 47 dient auch zum Ansetzen eines Werkzeugs. Der Rasthaken 46 umfaßt eine Rastfläche 48, die entgegen der Steckrichtung der Einschubkassette 24 weist. Im Übergangsbereich des unteren Wandabschnittes 8 und der Seitenwände 10 weist das Dosengehäuse 2 im Anschlußtopf 3 eine Rastaussparung 49 auf, in die der Rasthaken 46 einrastbar ist. Beide Seitenwände 25 weisen einen solchen Rasthaken 46 auf.

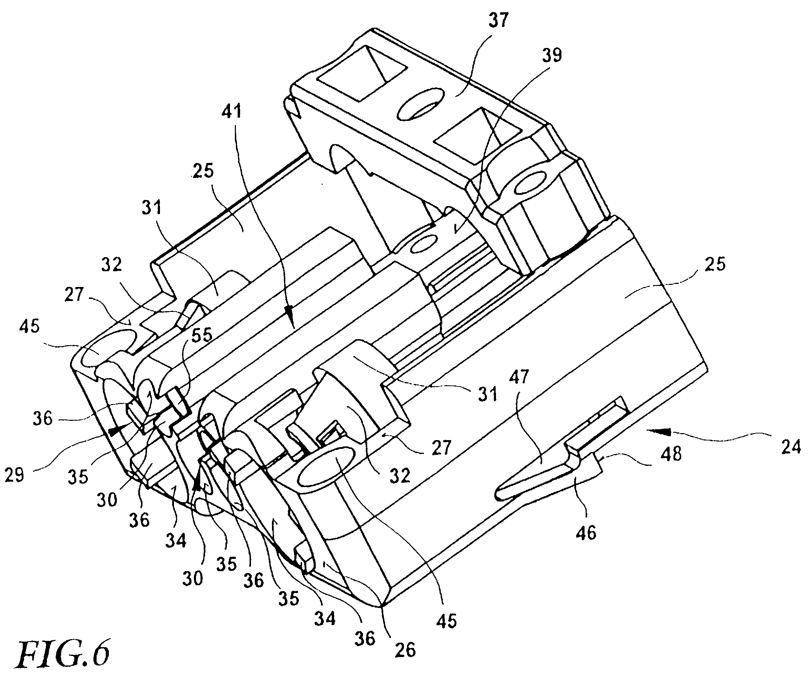

An der dem Anschlußtopf 3 zugewandten Seite 50 sind konzentrisch zu den Öffnungen 22 und zu den Öffnungen 23 Ringvorsprünge 51 und 52 vorgesehen. Die Ringvorsprünge 51 weisen einen Außendurchmesser derart auf, daß diese im wesentlichen paßgenau in die Ringvertiefungen 34 an der Einschubkassette 24 einführbar sind, in den Ringvorsprungen 51 sind zwei diametral gegenüberliegende Aussparungen 53 eingearbeitet, in die die Vorsprünge 36 an der Einschubkassette 24 paßgenau einsteckbar sind. Die Ringvorsprünge 52 sind in gleicher Weise in die Ringvertiefungen 35 an der Einschubkassette 24 paßgenau einführbar. Die Ringvorsprünge 51 und 52 sowie die zugehörigen Ringvertiefungen 34 und 35 können auch eine kegelstumpfförmige Mantelfläche bzw. Innenfläche aufweisen. Die Ringvorsprünge 52 weisen Ansätze 54 auf, die in Ausnehmungen 55 an der Einschubkassette 24 einsteckbar sind. Die Pilotkontaktstifte 17 werden hierdurch zusätzlich gesichert (siehe insbesondere Figuren 5 und 6).

Auf der zur Kontaktschürze 4 weisenden Seite 56 der Trennwand 5 (siehe Figur 4) sind konzentrisch zu den Öffnungen 22 und 23 Ringstege 57 und 58 angeordnet. Ähnlich wie die Ringvorsprünge 51 und 52 dienen die Ringstege 57 und 58 zur Erhöhung der elektrischen Kriechstrecken von einem Kontakt 16, 17 zum nächstliegenden Kontakt 16, 17. Um eine möglichst kompakte Gruppierung der Kontakte 16, 17 zu erreichen ist insbesondere die Höhe der Ringstege 57 und 58 sowie der Ringvorsprünge 51 und 52 maßgebend. Die Kriechstrecke zwischen zwei Kontakten 16, 17 soll bevorzugt größer gleich 6 mm betragen. In der Figur 4 ist auch die Öffnung 59 der Steckbefestigung 42 zu sehen, in die der Codierstift 43 eingesteckt wird.

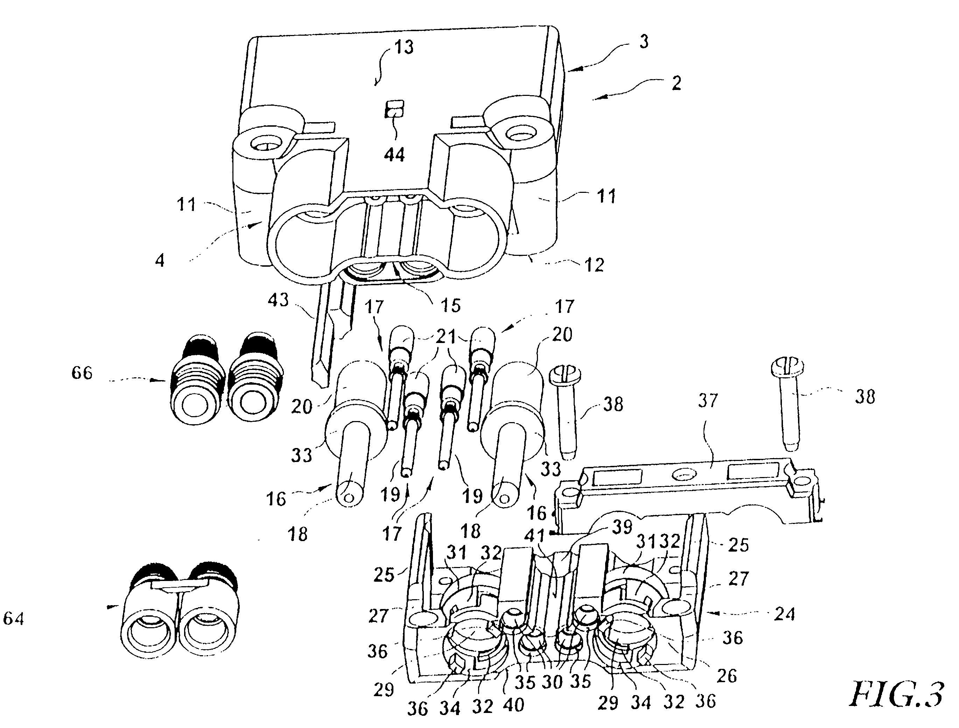

In der Unterseite der Einbuchtung 7 an der unteren Wand 8 des Anschlußtopfes 3 ist im wesentlichen paßgenau ein Gehäuse 60 einer Fluidkupplungseinheit angebracht. Die Höhe des Gehäuses 60 ist so gewählt, daß das Gehäuse 60 nicht über die Unterseite 12 der Befestigungshülsen 11 übersteht. In dem Gehäuse 60 sind zwei parallele Öffnungen 61 und 62 angeordnet, die sich ebenfalls parallel zu den Kontakten 16 und 17 erstrekken. In die Vorderseite 63 des Gehäuses 60 ist ein Paar Kupplungsbuchsen 64 eingesetzt (siehe Figur 1 und 3) und in die Rückseite 65 des Gehäuses 60 ist ein Paar Kupplungsstecker 66 in die Öffnungen 61 und 62 eingesetzt, an die Fluidleitungen angeschlossen werden. Die Kupplungsbuchsen 64 schließen im wesentlichen eben mit der Stimseite der Kontaktschürze 4 ab. Eine der Öffnungen 61 bzw. 62 dient zum Leiten von Luft und die andere Öffnung zum Leiten von Wasser. Das Gehäuse 60 kann einteilig mit dem Dosengehäuse 2, jedoch zum Anschlußtopf 3 und zur Kontaktschürze 4 abgetrennt bzw. abgedichtet, ausgeführt sein.

Im folgenden wird die Wirkungs- und Funktionsweise der oben beschriebenen Dose 1 anhand der Figuren 1 bis 6 näher erläutert.

Vor dem Zusammenbau der Dose 1 wird man zunächst die in Figur 3 dargestellten Einzelteile für den Zusammenbau vorbereiten. Zunächst werden die Hauptstiftkontakte 16 und Pilotkontaktstifte 17 in die zugehörigen Befestigungsöffnungen 29 und 30 in die Einschubkassette 24 eingesetzt. Dabei werden die Kontakte 16 und 17 mit ihrem Kontaktbereichen 18 bzw. 19 voran in diese Öffnungen 29, 30 von der Rückseite der Einschubkassette 24 her eingeschoben bis sie in der Einschubkassette 24 verrastet sind. Die Kontakte 16 oder 17 können dabei schon mit ihren Anschlußbereichen 20 und 21 verbunden sein. Die Kabel werden dann mittels dem Kabelklemmelement 37 und der Schrauben 38 an der Einschubkassette 24 festgeklemmt, so daß eine Zugentlastung bewirkt ist.

An dem Dosengehäuse kann entsprechend der gewünschten Spannung der Codierstift 43 in die Öffnung 59 eingeführt und in der Steckbefestigung 42 verrastet werden. In dem Sichtfenster 44 kann dann die codierte Spannung abgelesen werden.

Abhängig davon, ob die Dose 1 für einen zusätzlichen Fluidanschluß verwendet werden soll, werden die Kupplungsbuchsen 64 und Kupplungsstecker 66 an entsprechender Steile in das Fluidkupplungsgehäuse 60 dichtend eingesteckt.

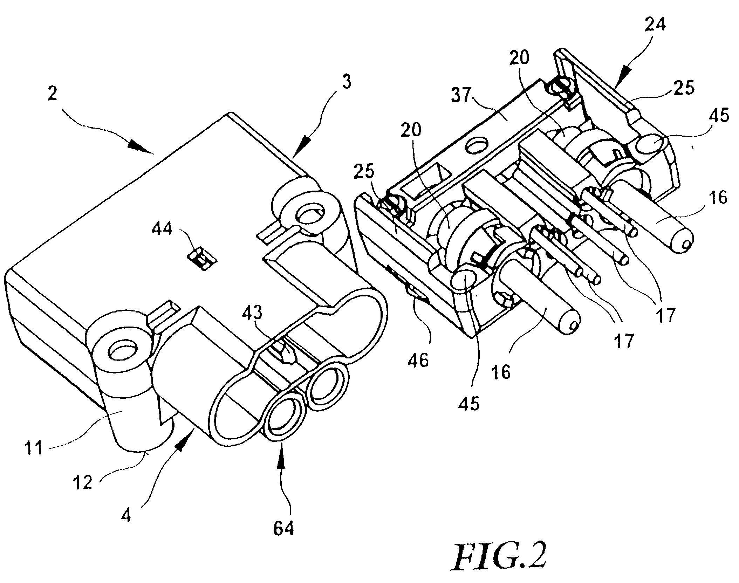

Anschließend liegen die zwei in Figur 2 getrennt dargestellten Baueinheiten vor (lediglich die Kabel sind aus Gründen der Übersichtlichkeit weggelassen).

Anschließend wird die Einschubkassette 24 von der Rückseite des Dosengehäuses 2 her in den Anschlußtopf 3 mit den Kontaktbereichen 18 und 19 voran eingeführt. Durchdas paßgenaue Entlanggleiten der Seitenwände 25 an den Seitenwänden 10 erfolgt eine automatische Durchführung der Kontaktbereiche 18 und 19 durch die Öffnungen 22 und 23 in der Trennwand 5. Erreicht die Einschubkassette 24 ihre Endstellung, rasten die Rasthaken 46 in den Rastaussparungen 49 am Dosengehäuse 2 ein und die Ringvertiefungen 34 und 35 und Ringvorsprünge 51 und 52 sowie die Vorsprünge 36 und Aussparungen 53 greifen ineinander. Hierdurch werden die gewünschten elektrischen Kriechstrecken erzielt.

Kommt es nun zur Umrüstung einer solchen Dose 1, kann die Einschubkassette 24 problemlos aus dem Anschlußtopf 3 entfernt werden. in dem die Rasthaken 46 zurückgefedert werden. Dies kann z.B. über entsprechende Zugriffsöffnungen im Anschlußtopf 3 erfolgen. Anschließend können problemlos Reparaturen oder Nachrüstungen sowie Umrüstungen an der Fluidkupplungseinheit vorgenommen werden, ohne daß die Kontakte 16 oder 17 strom- bzw. spannungslos gemacht werden müssen. Ein versehentliches Aneinanderschlagen der Kontakte kann durch ihre bestimmte Positionierung in der Einschubkassette 24 nicht erfolgen.

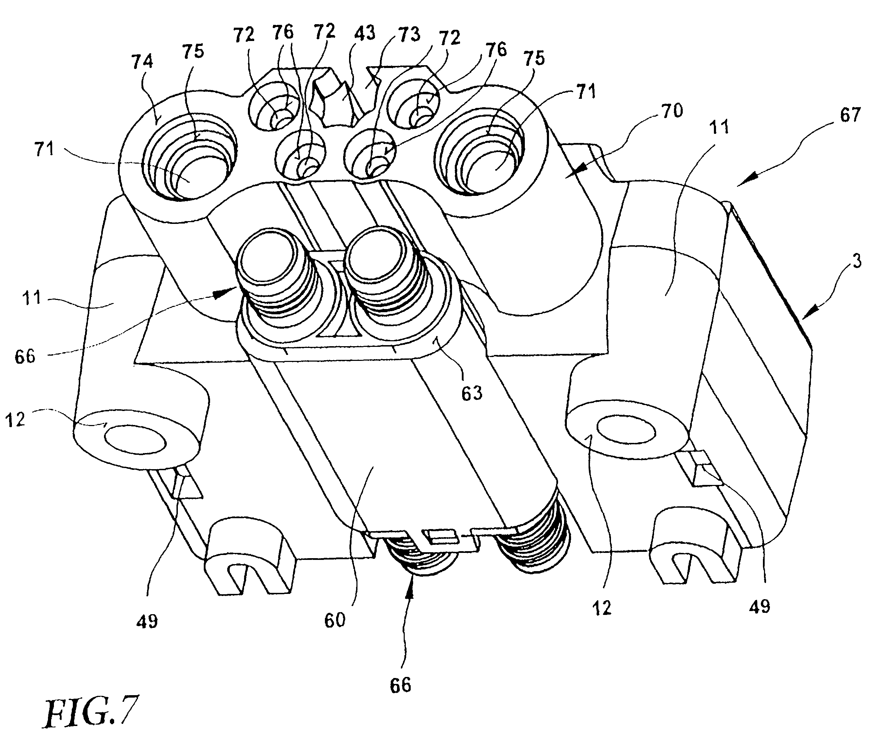

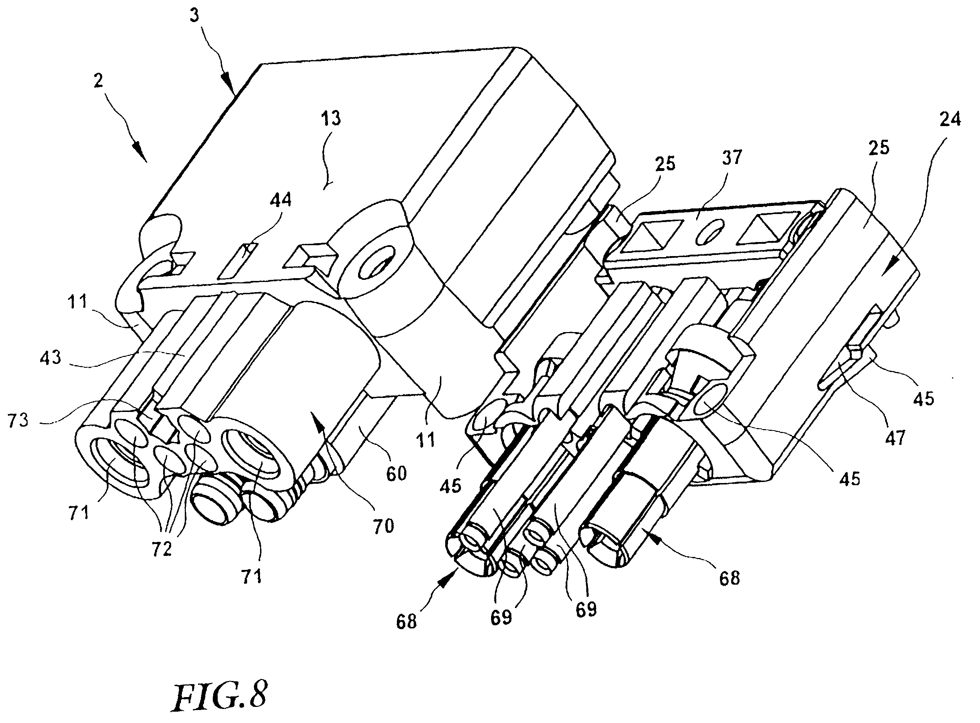

Anhand der Figuren 7 und 8 wird nun im folgenden ein Stecker 67 beschrieben. Der Stecker 67 ist so aufgebaut, daß er mit der Dose 1 gesteckt werden kann, so daß zugleich eine elektrische Verbindung als auch eine Fluidverbindung hergestellt wird.

Bei der Konstruktion von Dose 1 und Stecker 67 wurde darauf geachtet, daß weitgehenst gleich aufgebaute Bauelemente verwendet wurden. Deshalb wird im folgenden nur auf die wesentlichen Unterschiede zum Aufbau der Dose 1 eingegangen. Soweit gleiche Bezugsziffem verwendet werden, handelt es sich um einen identischen oder analogen Aufbau des entsprechenden Bauteils. So ist z.B. die Einschubkassette 24 und der gesamte vom Anschlußtopf 3 umgebende Bereich sowie dieser selbst identisch wie bei der Dose 1 aufgebaut. Eine genaue Beschreibung kann daher entfallen. Auch das Gehäuse 60 der Fluidkupplungseinheit ist im wesentlichen identisch, so daß auch dieses nicht mehr beschrieben werden muß.

Ein Hauptunterschied besteht darin, daß in dem Stecker 67 Hauptbuchsenkontakte 68 und vier Pilotkontaktbuchsen 69 verwendet werden, in die zugehörig die Kontaktbereiche 18 und 19 der Kontakte 16 und 17 einsteckbar sind. Die Anschlußbereiche der Hauptbuchsenkontakte 68 und Pilotkontaktbuchsen 69 sind identisch zu den Kontakten 16 und 17 aufgebaut, so daß sie in gleicher Weise in der Einschubkassette 64 verankert werden können. Der Stecker 67 weist einen sich axial an den Anschlußtopf 3 anschließenden Steckansatz 70 auf, dessen Außenkontur im wesentlichen an die Innenkontur der Kontaktschürze 4 angepaßt und in diese einsteckbar ist. Der Steckansatz 70 umfaßt zwei parallele Hauptöffnungen 71 und vier parallele Nebenöffnungen 72, die entsprechend zugehörig die Verlängerung der Öffnungen 22 und 23 in der Trennwand 5 darstellen. In den Hauptöffnungen 71 befinden sich die Hauptbuchsenkontakte 68 und in den Nebenöffnungen 72 die Pilotkontaktbuchsen 69. Des weiteren sind die Kontakte 16 und 17 entsprechend in diese einführbar.

Darüber hinaus weist der Steckansatz 70 eine Codieröffnung 73 auf, in der der Codierstift 43 des Steckers 67 aufgenommen ist. An der Stirnseite 74 weisen die Hauptöffnungen 71 und die Nebenöffnungen 72 einen zylindrischen Absatz 75 bzw. 76 auf, der in bereits geschilderter Weise zur Erhöhung der Kriechstrecke dient. In diesen, im wesentlichen zylinderförmigen Absätzen 75 und 76 sind die Ringstege 57 und 58 der Dose paßgenau aufnehmbar. In der Vorderseite 63 des Gehäuses 60 sind an Stelle der Kupplungsbuchsen 64 der Dose 1 beim Stecker 67 Kupplungsstecker 66 eingesetzt, die paßgenau in die Kupplungsbuchsen 64 einführbar sind. Geeignete Dichtungselemente sorgen für eine leckage freie Übertragung der Fluidströme.

Die durch die Dose 1 und den Stecker 67 gebildete Ladesteckvorrichtung zeichnet sich insbesondere durch eine sehr gute Kompaktheit aus und ist insbesondere für sehr hohe Ströme und Spannungen geeignet. Darüber hinaus ist die Teilevielzahl auf ein Mindestmaß reduziert worden, so daß dieser relativ preiswert herstellbar ist. Die Einschubkassette 24 bietet ein Höchstmaß an Sicherheit, ohne daß Maßnahmen getroffen werden müssen, die bei der Demontage für eine Spannungsfreiheit der Kontakte sorgen.

## Patentansprüche

1. Ladesteckvorrichtung zum Anschließen eines Akkumulators, mit einem Stecker (67) und einer Dose (1), die entsprechend ein Steckergehäuse und ein Dosengehäuse (2) aufweisen und die jeweils in dem entsprechenden Gehäuse angeordnete Hauptkontakte (16, 68) und/oder Pilotkontakte (17, 69) aufweisen, wobei die Gehäuse (2) einen mit dem jeweils anderen Gehäuse (2) steckbaren Kontaktbereich (4) und einen Anschlußbereich (3) aufweisen und die Hauptkontakte (16, 68) und/oder Pilotkontakte (17, 69) ebenfalls einen mit dem jeweils anderen Hauptkontakt (16, 68) und/oder Pilotkontakt (17, 69) koppelbaren Kontaktbereich (18, 19) und einen Anschlußbereich (20, 21) aufweisen und wobei die Kontaktbereiche (18, 19) der Hauptkontakte (16, 68) und/oder Pilotkontakte (17, 69) in dem Kontaktbereich (4) von Stecker (67) oder Dose (1) und die Anschlußbereiche (20, 21) der Hauptkontakte (16, 67) und/oder Pilotkontakte (17, 69) in dem Anschlußbereich (3) von Stecker (67) oder Dose (1) angeordnet sind,
**dadurch gekennzeichnet**,
daß der Anschlußbereich (3) des Steckers (67) oder der Dose (1) als Steckaufnahme (6) ausgebildet ist, daß eine Einschubkassette (24) mit Halte- und Positioniereinrichtungen vorgesehen ist, daß die Haupt- und/oder Pilotkontakte (16, 68; 17, 69) in den Halte- und Positioniereinrichtungen der Einschubkassette (24) vorpositioniert sind und daß die Einschubkassette (24) zusammen mit den vorpositionierten Haupt- und/oder Pilotkontakten (16, 68; 17, 69) lösbar in die Steckaufnahme (6) am Stecker (67) oder der Dose (1) einsteckbar ist.

2. Ladesteckvorrichtung nach Anspruch 1,
**dadurch gekennzeichnet**,
daß in der Steckaufnahme von Stecker (67) oder Dose (1) und an der Einschubkassette (24) Rasteinrichtungen (46, 49) vorgesehen sind, die im montierten Zustand von Stecker (67) oder Dose (1) mit der zugehörigen Einschubkassette (24) miteinander verrastet sind.

3. Ladesteckvorrichtung nach Anspruch 1 oder 2,
**dadurch gekennzeichnet**,
daß zwischen dem Anschlußbereich (3) und dem Kontaktbereich (4) von Stecker (67) oder Dose (1) eine Trennwand (5) nach Art einer Lochmaske angeordnet ist, wobei sich die Haupt- und/oder Pilotkontakte (16, 68; 17, 69) durch entsprechende Öffnungen (22, 23) in der Trennwand (5) von dem Anschlußbereich (3) in den Kontaktbereich (4) erstrecken, so daß die Kontaktbereiche (18, 19) der Haupt- und/oder Pilotkontakte (16, 68; 17, 69) im Kontaktbereich (4) des Steckers (67) oder der Dose (1) angeordnet sind.

4. Ladesteckvorrichtung nach einem der vorangegangenen Ansprüche,
**dadurch gekennzeichnet**,
daß die dem Aufnahmebereich (3) zugewandte Seite (50) der Trennwand (5) zumindest abschnittsweise eine Profilierung aufweist, die mit einer an der zugeordneten Stirnseite (26) der Einschubkassette (24) zumindest abschnittsweise angeordneten Gegenprofilierung (34, 35) ineinandergreift.

5. Ladesteckvorrichtung nach einem der vorangegangenen Ansprüche,
**dadurch gekennzeichnet**,
daß die Profilierung (51, 52) und die Gegenprofilierung (34, 35) als entsprechend ineinander greifbare, konzentrisch zu den Öffnungen (22, 23) in der Trennwand (5) angeordnete Ringvorsprünge und/oder Ringvertiefungen ausgebildet sind.

6. Ladesteckvorrichtung nach einem der vorangegangenen Ansprüche,
**dadurch gekennzeichnet**,
daß die Ringvorsprünge (51, 52) und/oder Ringvertiefungen (34, 35) eine kegelstumpfförmige Mantelfläche bzw. Innenfläche aufweisen.

7. Ladesteckvorrichtung nach einem der vorangegangenen Ansprüche.
**dadurch gekennzeichnet**,
daß die Ringvorsprünge (51, 52) an der Trennwand (5) des Steckers (67) oder der Dose (1) und die Ringvertiefungen (34, 35) in der Stirnseite (26) der Einschubkassette (24) angeordnet sind.

8. Ladesteckvomchtung nach einem der vorangegangenen Ansprüche,
**dadurch gekennzeichnet**,
daß eine Höhe bzw. eine Tiefe sowie eine Breite der Ringvorsprünge (51, 52) und/oder Ringvertiefungen (34, 35) derart gewählt sind, daß die elektrischen Kriechstrecken von einem Kontakt (16, 68; 17, 69) zum nächstliegenden Kontakt (16. 68; 17, 69) oberhalb eines für entsprechende Spannungen bzw. Stromstärken genormten Wertes, bevorzugt 6 mm, liegen.

9. Ladesteckvorrichtung nach einem der vorangegangenen Ansprüche,
**dadurch gekennzeichnet**,
daß die Halte- und Positioniereinrichtungen Rasteinrichtungen (31, 32) aufweisen, die mit entsprechenden Rasthinterschneidungen (33) an den Haupt- und/oder Pilotkontakten (16, 68; 17, 69) verrastbar sind.

10. Ladesteckvorrichtung nach einem der vorangegangenen Ansprüche,
**dadurch gekennzeichnet**,
daß zwischen dem Kontaktbereich (18, 19) und dem Anschlußbereich (20, 21) der Haupt- und/oder Pilotkontakt (16, 68; 17, 69) ein radial vorstehender, ringscheibenförmiger Abschnitt (33) derart vorgesehen und ausgebildet ist, daß die Rasteinrichtungen (31, 32) der Halte- und Positioniereinrichtungen an diesem verrastbar sind.

11. Ladesteckvorrichtung nach einem der vorangegangenen Ansprüche,
**dadurch gekennzeichnet**,
daß im Bereich der Ringvertiefungen (34, 35) radial nach innen vorstehende Vorsprünge (36) angeordnet sind und daß der ringscheibenförmige Abschnitt (33) im vorpositionierten Zustand der Haupt- und/oder Pilotkontakte (16, 68; 17, 69) zwischen den Vorsprüngen (36) und der zugehörigen Rasteinrichtungen (31, 32) der Halte- und Positioniereinrichtung angeordnet ist.

12. Ladesteckvorrichtung nach einem der vorangegangenen Ansprüche,
**dadurch gekennzeichnet**,
daß in den Ringvorsprüngen (51, 52) Aussparungen (53) angeordnet sind, in die Vorsprünge (36) an den Ringvertiefungen (34, 35) eingreifen.

13. Ladesteckvorrichtung nach einem der vorangegangenen Ansprüche,
**dadurch gekennzeichnet,**
daß auf der dem Kontaktbereich (4) zugewandten Seite (56) der Trennwand (5) an dem Stecker (67) und/oder der Dose (1) eine um die Öffnung (22, 23) angeordnete Profilierung (57, 58) derart angeordnet ist, daß die elektrischen Kriechstrecken von einem Kontakt (16, 68; 17, 69) zum nächstliegenden Kontakt (16, 68; 17, 69) oberhalb eines für entsprechende Spannungen bzw. Stromstärken genormten Wertes, bevorzugt 6 mm, liegen.

14. Ladesteckvorrichtung nach einem der vorangegangenen Ansprüche,
**dadurch gekennzeichnet**,
daß die Profilierung (57, 58) auf der dem Kontaktbereich (4) zugewandten Seite (56) der Trennwand (5) als konzentrisch um die Öffnungen (22, 23) angeordnete Ringstege (57, 58) ausgebildet ist.

15. Ladesteckvorrichtung nach einem der vorangegangenen Ansprüche,
**dadurch gekennzeichnet**,
daß die Einschubkassette (24) als parallele Führungsschienen ausgebildete Seitenwände (25) aufweist, die einen äußeren Abstand voneinander und eine Höhe derart aufweisen, daß die Einschubkassette (24) im wesentlichen paßgenau in die Steckaufnahme (6) an dem Stecker (67) oder der Dose (1) einsteckbar ist.

16. Ladesteckvorrichtung nach einem der vorangegangenen Ansprüche,
**dadurch gekennzeichnet**,
daß an dem Stecker- und dem Dosengehäuse (2) eine außerhalb des von dem Gehäuse (2) umgrenzten Kontakt- und Anschlußbereiches (3, 4) angeordnete Fluidkupplungseinheit angeordnet ist.

17. Ladesteckvorrichtung nach einem der vorangegangenen Ansprüche,
**dadurch gekennzeichnet**,
daß das Gehäuse (2) eine Oberseite (13) und eine Unterseite aufweist und die Fluidkupplungseinheit an der Unterseite angeordnet ist.

18. Ladesteckvorrichtung nach einem der vorangegangenen Ansprüche,
**dadurch gekennzeichnet**,
daß die Fluidkupplungseinheit derart in einer Einbuchtung (7, 15) am Gehäuse (2) angeordnet ist, daß die äußere Kontur der Fluidkupplungseinheit nicht über einen von der maximalen Höhe, Breite und Länge des Gehäuses (2) definierten Quader übersteht.

19. Ladesteckvorrichtung nach einem der vorangegangenen Ansprüche,
**dadurch gekennzeichnet**,
daß die Fluidkupplungseinheit einer parallel zu den Kontakten (16, 68; 17, 69) angeordnete Luftleitung und eine parallel zu den Kontakten (16, 68; 17, 69) angeordnete Wasserleitung umfaßt.

## Claims

1. Charging plug-in device for connecting a storage battery, with a plug (67) and a socket (1), which correspondingly have a plug housing and a socket housing (2) and which have in each case main contacts (16, 68) and/or pilot contacts (17, 69) arranged in the corresponding housing, the housings (2) having a contact region (4) which can be plugged with the other housing (2), respectively, and having a connection region (3), and the main contacts (16, 68) and/or pilot contacts (17, 69) likewise having a contact region (18, 19) which can be coupled with the other main contact (16, 68) and/or pilot contact (17, 69), respectively, and having a connection region (20, 21), and the contact regions (18, 19) of the main contacts (16, 68) and/or pilot contacts (17, 69) being arranged in the contact region (4) of the plug (67) or socket (1) and the connection regions (20, 21) of the main contacts (16, 67) and/or pilot contacts (17, 69) being arranged in the connection region (3) of the plug (67) or socket (1), characterized in that the connection region (3) of the plug (67) or the socket (1) is designed as a plug-in receptacle (6), in that a push-in module (24) with retaining and positioning devices is provided, in that the main and/or pilot contacts (16, 68; 17, 69) are pre-positioned in the retaining and positioning devices of the push-in module (24) and in that the push-in module (24) can be releasably plugged together with the pre-positioned main and/or pilot contacts (16, 68; 17, 69) into the plug-in receptacle (6) on the plug (67) or the socket (1).

2. Charging plug-in device according to Claim 1, characterized in that latching devices (46, 49) are provided in the plug-in receptacle of the plug (67) or socket (1) and on the push-in module (24), engaging with one another in the assembled state of the plug (67) or socket (1) with the associated push-in module (24).

3. Charging plug-in device according to Claim 1 or 2, characterized in that a separating wall (5) in the manner of a perforated mask is arranged between the connection region (3) and the contact region (4) of the plug (67) or socket (1), the main and/or pilot contacts (16, 68; 17, 69) extending through corresponding openings (22, 23) in the separating wall (5) from the connection region (3) into the contact region (4), so that the contact regions (18, 19) of the main and/or pilot contacts (16, 68; 17, 69) are arranged in the contact region (4) of the plug (67) or the socket (1).

4. Charging plug-in device according to one of the preceding claims, characterized in that the side (50) of the separating wall (5) facing the receiving region (3) has, at least in certain portions, a profiling which interengages with a counter-profiling (34, 35) arranged at least in certain portions on the assigned end face (26) of the push-in module (24).

5. Charging plug-in device according to one of the preceding claims, characterized in that the profiling (51, 52) and the counter-profiling (34, 35) are designed as correspondingly interengageable annular projections and/or annular depressions arranged concentrically with respect to the openings (22, 23) in the separating wall (5).

6. Charging plug-in device according to one of the preceding claims, characterized in that the annular projections (51, 52) and/or annular depressions (34, 35) have a frustoconical outer circumferential surface or inner surface.

7. Charging plug-in device according to one of the preceding claims, characterized in that the annular projections (51, 52) are arranged on the separating wall (5) of the plug (67) or the socket (1) and the annular projections (34, 35) are arranged in the end face (26) of the push-in module (24).

8. Charging plug-in device according to one of the preceding claims, characterized in that a height or a depth and a width of the annular projections (51, 52) and/or annular depressions (34, 35) are chosen in such a way that the electrical creepage distances from one contact (16, 68; 17, 69) to the next closest contact (16, 68; 17, 69) lie above a value standardized for corresponding voltages or current intensities, preferably 6 mm.

9. Charging plug-in device according to one of the preceding claims, characterized in that the retaining and positioning devices have latching devices (31, 32), which can engage with corresponding latching undercuts (33) on the main and/or pilot contacts (16, 68; 17, 69).

10. Charging plug-in device according to one of the preceding claims, characterized in that a radially protruding, annular-disc-shaped portion (33) is provided between the contact region (18, 19) and the connection region (20, 21) of the main and/or pilot contacts (16, 68; 17, 69) and is designed in such a way that the latching devices (31, 32) of the retaining and positioning devices can be engaged on it.

11. Charging plug-in device according to one of the preceding claims, characterized in that radially inwardly protruding projections (36) are arranged in the region of the annular recesses (34, 35) and in that, in the pre-positioned state of the main and/or pilot contacts (16, 68; 17, 69), the annular-disc-shaped portion (33) is arranged between the projections (36) and the associated latching devices (31, 32) of the retaining and positioning device.

12. Charging plug-in device according to one of the preceding claims, characterized in that clearances (53) into which projections (36) at the annular depressions (34, 35) engage are arranged in the annular projections (51, 52).

13. Charging plug-in device according to one of the preceding claims, characterized in that, on the side (56) of the separating wall (5) facing the contact region (4), a profiling (57, 58) arranged around the opening (22, 23) is arranged on the plug (67) and/or the socket (1) in such a way that the electrical creepage distances from one contact (16, 68; 17, 69) to the next closest contact (16, 68; 17, 69) lie above a value standardized for corresponding voltages or current intensities, preferably 6 mm.

14. Charging plug-in device according to one of the preceding claims, characterized in that the profiling (57, 58) on the side (56) of the separating wall (5) facing the contact region (4) is designed as annular ridges (57, 58) arranged concentrically around the openings (22, 23).

15. Charging plug-in device according to one of the preceding claims, characterized in that the push-in module (24) has side walls (35) which are designed as parallel guide rails and have an outer distance from one another and a height such that the push-in module (24) can be plugged essentially with an exact fit into the plug-in receptacle (6) on the plug (67) or the socket (1).

16. Charging plug-in device according to one of the preceding claims, characterized in that a fluid coupling unit arranged outside the contact and connection region (3, 4) bounded by the housing (2) is arranged on the plug and socket housings (2).

17. Charging plug-in device according to one of the preceding claims, characterized in that the housing (2) has an upper side (13) and an underside and the fluid coupling unit is arranged on the underside.

18. Charging plug-in device according to one of the preceding claims, characterized in that the fluid coupling unit is arranged in a relief (7, 15) on the housing (2) in such a way that the outer contour of the fluid coupling unit does not jut out beyond a right-parallelepiped defined by the maximum height, width and length of the housing (2).

19. Charging plug-in device according to one of the preceding claims, characterized in that the fluid coupling unit comprises an air line arranged parallel to the contacts (16, 68; 17, 69) and a water line arranged parallel to the contacts (16, 68; 17, 69).

## Revendications

1. Dispositif de prise de courant pour recharge à raccorder à un accumulateur avec une fiche (67) et une prise(1), qui présentent de façon correspondante un boîtier de fiche et un boîtier (2) de prise et qui présentent des contacts principaux (16, 68) et/ou des contacts pilotes (17, 69) disposés respectivement dans le boîtier correspondant, les boîtiers (2) présentant une zone de contact (4) pouvant s'embrocher avec respectivement l'autre boîtier (2) et une zone de raccordement (3), et les contacts principaux (16,68) et/ou les contacts pilotes (17,69) présentant également une zone de contact (18, 19) et une zone de raccordement (20, 21) pouvant être accouplées avec respectivement l'autre contact principal (16, 68) et/ou l'autre contact pilote (17, 69), les zones de contact (18, 19) des contacts principaux (16, 68) et/ou des contacts pilotes (17, 69) étant disposées dans la zone de contact (4) de la fiche (67) ou de la prise (1), et les zones de raccordement (20, 21) des contacts principaux (16, 67) et/ou des contacts pilotes (17, 69) étant disposées dans la zone de raccordement (3) de la fiche (67) ou de la prise (1),
caractérisé en ce que
• la zone de raccordement (3) de la fiche (67) ou de la prise (1) est constituée sous la forme d'un logement d'enfichage (6),
• il est prévu une cassette embrochable (24) avec des dispositifs de maintien et de positionnement,
• les contacts principaux (16, 68) et/ou les contacts pilotes (17, 69) sont prépositionnés dans les dispositifs de maintien et de positionnement de la cassette embrochable (24), et
• la cassette embrochable (24) peut être embrochée en même temps que les contacts principaux (16, 68) et/ou les contacts pilotes (17, 69) de manière amovible dans le logement d'enfichage (6) sur la fiche (67) ou sur la prise (1).

2. Dispositif de prise de courant pour recharge selon la revendication 1,
caractérisé en ce que
dans le logement d'enfichage de la fiche (67) ou de la prise (1) et sur la cassette embrochable (24), des dispositifs d'encliquetage (46, 49) sont encliquetés avec la cassette embrochable correspondante (24) quand la fiche (67) ou la prise (1) est en position montée.

3. Dispositif de prise de courant pour recharge selon la revendication 1 ou 2,
caractérisé en ce qu' entre la zone de raccordement (3) et la zone de contact (4) de la fiche (67) ou de la prise (1), on dispose une paroi de séparation (5) du type d'un masque à trous, les contacts principaux (16, 68) et/ou les contacts pilotes (17, 69) s'étendant à travers des orifices correspondants (22, 23) dans la paroi de séparation (5) de la zone de raccordement (3) dans la zone de contact (4), de telle sorte que les zones de contact (18, 19) des contacts principaux (16, 68) et/ou des contacts pilotes (17, 69) sont disposées dans la zone de contact (4) de la fiche (67) ou de la prise (1).

4. Dispositif de prise de courant pour recharge selon l'une des revendications précédentes,
caractérisé en ce que
le côté (50) de la paroi de séparation, qui est tourné vers la zone de logement (3) présente au moins de façon fragmentaire un profil qui vient en prise avec un profil opposé (34, 35) disposé au moins de façon fragmentaire sur le côté frontal correspondant (26) de la cassette embrochable (24).

5. Dispositif de prise de courant pour recharge selon l'une des revendications précédentes,
caractérisé en ce que
le profil (51, 52) et le profil opposé (34, 35) sont constitués sous la forme de saillies annulaires et ou de renfoncements annulaires disposés concentriquement aux orifices (22, 23) dans la paroi de séparation (5), et pouvant venir en prise de façon correspondante les uns dans les autres.

6. Dispositif de prise de courant pour recharge selon l'une des revendications précédentes,
caractérisé en ce que
les saillies annulaires (51, 52) et/ou les renfoncements annulaires (34, 35) présentent une face d'enveloppe ou une face intérieure en forme de tronc de cône.

7. Dispositif de prise de courant pour recharge selon l'une des revendications précédentes,
caractérisé en ce que
les saillies annulaires (51, 52) sont disposées sur la paroi de séparation (5) de la fiche (67) ou de la prise (1) et les renfoncements annulaires (34, 35) sont disposés dans le côté frontal (26) de la cassette embrochable (24).

8. Dispositif de prise de courant pour recharge selon l'une des revendications précédentes,
caractérisé en ce que
la hauteur, la profondeur ainsi que la largeur des saillies annulaires (51, 52) et/ou des renfoncements annulaires (34, 35) sont choisies d'une manière telle que les lignes de fuites électriques allant d'un contact (16, 68; 17, 69) au contact immédiatement suivant (16, 68; 17, 69) se trouvent au dessus d'une valeur normalisée pour des tensions ou des intensités correspondantes, de préférence de 6 mm.

9. Dispositif de prise de courant pour recharge selon l'une des revendications précédentes,
caractérisé en ce que
les dispositifs de maintien et de positionnement présentent des dispositifs d'encliquetage (31, 32) qui sont enclique-tables avec des contre-dépouilles d'encliquetage correspondantes (33) sur les contacts principaux et/ou sur les contacts pilotes (16,68; 17, 69).

10. Dispositif de prise de courant pour recharge selon l'une des revendications précédentes,
caractérisé en ce qu'
entre la zone de contact (18, 19) et la zone de raccordement (20, 21) des contacts principaux et/ou des contacts pilotes (16,68; 17, 69), on prévoit et on constitue une section (33) faisant saillie radialement, en forme de disque annulaire, d'une manière telle que les dispositifs d'encliquetage (31, 32) des dispositifs de maintien et de positionnement peuvent s'encliqueter dessus.

11. Dispositif de prise de courant pour recharge selon l'une des revendications précédentes,
caractérisé en ce que
• dans la zone des renfoncements annulaires (34, 35) des saillies (36) sont disposées radialement vers l'intérieur, et
• la section (33) en forme de disque annulaire est disposée, quand les contacts principaux et/ou les contacts pilotes (16, 68; 17, 69) sont en état de prépositionnement, entre les saillies (36) et les dispositifs correspondants d'encliquetage (31, 32) du dispositif de maintien et de positionnement.

12. Dispositif de prise de courant pour recharge selon l'une des revendications précédentes,
caractérisé en ce que
dans les saillies annulaires (51, 52) sont disposés des évidements (53) dans lesquels viennent en prise des saillies (36) des renfoncements annulaires (34, 35).

13. Dispositif de prise de courant pour recharge selon l'une des revendications précédentes,
caractérisé en ce que
sur le côté (56) de la paroi de séparation (5), qui est tourné vers la zone de contact (4), on dispose sur la fiche (67) ou sur la prise (1) un profil (57, 58) qui est disposé autour de l'orifice (22, 23) d'une manière telle que les lignes de fuites électriques allant d'un contact (16, 68; 17, 69) au contact immédiatement suivant (16, 68; 17, 69) se trouvent au dessus d'une valeur normalisée pour des tensions ou des intensités correspondantes, de préférence de 6 mm.

14. Dispositif de prise de courant pour recharge selon l'une des revendications précédentes,
caractérisé en ce que
le profil (57, 58) est constitué sur le côté (56) de la paroi de séparation, qui est tourné vers la zone de contact (4) sous la forme d'entretoises annulaires (57, 58), disposées de façon concentrique autour des orifices (22, 23)

15. Dispositif de prise de courant pour recharge selon l'une des revendications précédentes,
caractérisé en ce que '
la cassette embrochable (24) présente des parois latérales (25) constituées sous la forme de rails de guidage parallèles, qui présentent une distance extérieure l'une par rapport à l'autre et une hauteur telles que la cassette embrochable (24) peut être embrochée de façon sensiblement ajustée dans le logement d'enfichage (6) sur la fiche (67) ou sur la prise (1).

16. Dispositif de prise de courant pour recharge selon l'une des revendications précédentes,
caractérisé en ce que
sur le boîtier (2) de la fiche et de la prise une unité d'accouplement pour fluide est disposée en dehors de la zone de contact et de raccordement (3, 4) entourée par le boîtier (2).

17. Dispositif de prise de courant pour recharge selon l'une des revendications précédentes,
caractérisé en ce que
le boîtier (2) présente un côté supérieur (13) et un côté inférieur et l'unité d'accouplement pour fluide est disposée sur le côté inférieur.

18. Dispositif de prise de courant pour recharge selon l'une des revendications précédentes,
caractérisé en ce que
l'unité d'accouplement pour fluide est disposée dans une échancrure (7, 15) sur le boîtier (2) d'une manière telle que le contour extérieur de l'unité d'accouplement pour fluide ne dépasse pas au dessus d'un parallélépipède défini par la hauteur, la largeur et la longueur maximale du boîtier (2).

19. Dispositif de prise de courant pour recharge selon l'une des revendications précédentes,
caractérisé en ce que
l'unité d'accouplement pour fluide comprend une canalisation d'air disposée parallèlement aux contacts (16, 68; 17, 69) et une canalisation d'eau disposée parallèlement aux contacts (16, 68; 17, 69).
